# EUROPEAN PATENT SPECIFICATION

(11) **EP 4 702 729 B1**
(45) Date of publication and mention of the grant of the patent: **03.06.2026**
(21) Application number: 23721879.7
(22) Date of filing: 24.04.2023
(51) Int. Cl.: H04L 67/12, G05B 19/418, B25J 9/16

(54) **CONTROL NETWORK FOR MOBILE ROBOTS**
STEUERNETZWERK FÜR MOBILE ROBOTER
RÉSEAU DE COMMANDE POUR ROBOTS MOBILES

(43) Date of publication of application: 04.03.2026
(73) Proprietor: ABB SCHWEIZ AG, 5400 Baden (CH)
(72) Inventor: FALCO, Pietro, 81030 Parete (CE) (IT); DOBRIJEVIC, Ognjen, 723 39 Västerås (SE); AHMAD, Aftab, 722 10 Västerås (SE); KONTAXAKIS, Polychronis, Thessaloniki, 54639 (GR)
(74) Representative: Kransell & Wennborg KB
(86) International application number: PCT/EP2023/060608
(87) International publication number: WO 2024/223021

(56) References cited:
- SIVRIKAYA FIKRET ET AL: "Reciprocal impact of autonomous vehicles and network resource management", 2017 IEEE VEHICULAR NETWORKING CONFERENCE (VNC), IEEE, 27 November 2017 (2017-11-27), pages 231 - 234, XP033310851, DOI: 10.1109/VNC.2017.8275640

## Description

### TECHNICAL FIELD

The present disclosure relates to the field of mobile robot control. In particular, it discloses a control network for supporting one or more mobile robots which operate in a facility, wherein the control network includes a fleet management system and a network management system.

### BACKGROUND

Motion planning for mobile robots and mobile robot manipulators is supported to an increasing degree by edge computing nodes, and corresponding robot control algorithms are often executed in edge computing nodes. For example, the applicant's earlier disclosure WO2022214193 relates to a control network for supporting one or more mobile robots operable in a facility, such as a factory, warehouse, port or container terminal. In the control network, a fleet management system (FMS) is authorized to perform path planning and path execution for the mobile robots, and a network management system (NMS) is authorized to configure and perform resource allocation in a single access network. The respective authorities of the FMS and the NMS are mutually exclusive. The access network, which provides the mobile robots with wireless connectivity in the facility, may be a general-purpose network, such as 5G (3GPP NR) or Wi-Fi 6 (IEEE 802.11ax), or may use a dedicated industrial wireless technology, such as WIA-FA (Wireless Networks for Industrial Automation - Factory Automation, specified in IEC PAS 62948 and others).

To mention a few further examples, it is discussed in the research paper Ortiz et al., "Fleet management system for mobile robots in healthcare environments", Journal of Industrial Engineering and Management, vol. 14 (2021), pp. 55-71 [DOI: 10.3926/jiem.3284] how an FMS can be designed and implemented so as to support a fleet of mobile robots for indoor logistic applications in healthcare and commercial environments.

In Lee et al., "Constructing a reliable and fast recoverable network for drones", 2016 IEEE International Conference on Communications (ICC), pp. 1-6 [DOI: 10.1109/ICC.2016.7511317], a centralized routing protocol for multiple drones which make up a mobile ad-hoc network is proposed. Drones inter-communicate in a multi-hop fashion to convey their control commands, thus a failure of any network link can have a critical impact. The routing leverages information on drones, such as their geo-location, flight schedule and status. A fleet management module plans and creates flight control commands for each drone, while simultaneously monitoring drones' position. Information about required routing among drones is then configured in the drones, which monitor communication links toward their neighbors and report to the centralized routing if a link fails due to, e.g., too large distance.

Further, Lyczkowski et al., "SDN Controlled Visible Light Communication Clusters for AGVs", 2021 Joint European Conference on Networks and Communications & 6G Summit (EuCNC/6G Summit), pp. 154-159 [DOI: 10.1109/EuCNC/6GSummit51104.2021.9482417] describes an approach to improving communication latency and reliability for cooperative tasks of AGVs. The approach envisages employing both infrastructure-based links (i.e., Wi-Fi) and an ad-hoc network (based on principles of Visible Light Communication, VLC) to exchange control information among AGVs sharing a task. A clustering of AGVs, which utilizes knowledge of factory production and network communication state, is performed to minimize the number of switchovers between using Wi-Fi and VLC for communication. Document SIVRIKAYA F. et al., "Reciprocal impact of autonomous vehicles and network resource management", 2017 IEEE Vehicular Networking Conference (VNC), Turin, 2017, pp. 231-234, XP033310851, DOI 10.1109/VNC.2017.8275640 is identified as bckround art.

The access network in a mobile robot system should ideally handle all expected communication scenarios with an adequate performance. The radio resources of every access network are inherently limited. Communication performance is especially challenging when a group of mobile robots shares a wireless network with factory machinery and/or other wireless devices. Then, the performance for mobile robots can be degraded due to other machines, wearables in use by human workers, and/or handheld devices competing for the same network resources. If wireless clients keep connecting to the shared network in large numbers, a negative performance effect may be felt not only by the most recently added clients but also the existing ones. The negative performance effect could include longer communication delays, loss of data, and even a refusal to connect to the network at all.

Although the number of wireless clients that are allowed to connect to a network can be limited by administrative means (e.g., imposing a cap through configuration), the communication performance can still be seen to degrade if available radio resources cannot match all network traffic requirements. There are several mobile robot and mobile robot manipulator types on the market with very sophisticated perception capabilities, some of them carrying multiple 3D video cameras, which are to be deployed on factory floors or in healthcare institutions. When the perception data needs to be processed in an edge computing node for the purposes of visual SLAM (simultaneous localization and mapping), robot motion control and robot task control, the resulting traffic from a group of such robot units may impose a great resource strain. If resources of a wireless network are saturated, both the perception data (sent to the edge computing node) and robot motion references (sent to the mobile robots) may not reach their destinations in due time or may get lost. This would prevent mobile robots and mobile robot manipulators from realizing a reactive behavior, which is of key importance in unstructured working environments.

In view of these constraints and technical difficulties, a solution allowing such robotics applications to be supported by edge computing resources at reasonable capital cost and operational expenditure would be of high value.

### SUMMARY

One objective of the present disclosure is to make available a control network for supporting mobile robots with an ability to allocate network resources in the access networks such that important mobile robots and/or important robot tasks are prioritized over others in a systematic and fair manner. A further objective is to avoid costly downtime and emergency stops caused by insufficiencies on the part of the access network. A further objective is to provide reasonable certainty that sufficient network resources will be available before a robot task is initiated. A further objective is to enable adaptations during path execution or task execution based on how the quality of service (QoS) develops over time; such adaptations could affect the relative priorities of the robots or robot tasks, as well as the path planning or task planning. A still further objective of the present disclosure is to make available a method to be executed in such a control network, e.g., by one or more nodes in the control network.

At least some of these objectives are achieved by the invention as defined by the independent claims. The dependent claims relate to advantageous embodiments.

In a first aspect of the present disclosure, there is provided a control network for supporting one or more mobile robots operable in a facility. The control network comprises a fleet management system (FMS) and a network management system (NMS) with mutually exclusive authorities. In particular, the FMS is authorized to perform path planning and path execution for the one or more mobile robots, and to assign at least one connectivity priority to a particular robot or robot task. The NMS for its part is authorized to configure and perform network resource allocation in two or more access networks, wherein each of the access networks is operable to provide a predefined group of the one or more mobile robots with wireless connectivity in the facility and/or to provide a mobile robot with such connectivity while it executes a predefined class of robot tasks. According to the first aspect, the FMS is configured to generate, on the basis of the path planning, a predictive network resource request and share this with the NMS. The NMS is configured to perform network resource allocation within each of the access networks in accordance with the at least one connectivity priority.

By the use of the one or more connectivity priorities, the FMS is enabled to influence the distribution of the currently available network resources - as carried out by the NMS - in a configurable manner. The use of the connectivity priorities allows the network resources to be distributed in a systematic and stable manner. Notably, a temporary drop in overall network performance (e.g., due to congestion) is normally no compelling reason to update the connectivity priorities. Another advantage is that the FMS need not be granted access rights to the access networks and/or the NMS; rather, these components of the control network can be owned by an external party, or the operation of the components can be outsourced.

In some embodiments, the FMS updates the connectivity priorities based on how the QoS of the access networks develops over time, which can be monitored through QoS reports that the NMS makes available.

In a second aspect of the present disclosure, there is provided a method in the FMS of the control network. The method comprises: assigning at least one connectivity priority to a particular robot or robot task; performing planning, including path planning and optionally task planning, for the one or more mobile robots; generating a predictive network resource request on the basis of an output of the planning, and sharing this with the NMS; causing the NMS to allocate network resources in the access networks to the one or more mobile robots in accordance with the at least one connectivity priority; and executing the output of the planning, including the path planning and optionally the task planning.

In one embodiment of the method of the second aspect, the planning further comprises task planning for at least one of the robots.

In one embodiment, the method of the second aspect further comprises sharing a QoS request with the NMS, and deciding to execute the robot task only upon receipt of a positive reply from the NMS. In particular, the method may comprise updating at least one assigned connectivity priority upon receipt of a negative reply from the NMS. Within this embodiment, the QoS request may relate to a robot task to be performed in a specified time interval. Additionally or alternatively, the QoS request may include a required priority of treatment of a robot performing the robot task. Additionally or alternatively, the QoS request may include one or more of: an estimated bandwidth, data throughput, packet loss rate, packet loss burstiness, transmission reliability, latency, latency variation.

In one embodiment, the method of the second aspect further comprises receiving from the NMS a current QoS report, and performing one or more of the following on the basis of the current QoS report: a) updating at least one previously assigned connectivity priority; b) updating the planning, including the path planning; c) sharing an updated QoS request with the NMS, wherein the updated QoS request replaces a previous QoS request.

In one embodiment of the method of the second aspect, executing the output of the planning includes feeding control data to a mobile robot and receiving sensor data from the mobile robot.

In a third aspect of the present disclosure, there is provided a method in the NMS of the control network. The method comprises: receiving at least one connectivity priority assigned to a particular robot or robot task; receiving a predictive network resource request; and allocating network resources in the access networks to the one or more mobile robots in accordance with the received at least one connectivity priority.

In one embodiment, the method of the third aspect further comprises configuring the access networks in accordance with the at least one received connectivity priority.

In one embodiment, the method of the third aspect further comprises receiving a QoS request, and the network resources are allocated further on the basis of the QoS request. Within this embodiment, the QoS request may relate to a robot task to be performed in a specified time interval. Additionally or alternatively, the QoS request may include a required priority of treatment of a robot performing the robot task. Additionally or alternatively, the QoS request may include one or more of: an estimated bandwidth, data throughput, packet loss rate, packet loss burstiness, transmission reliability, latency, latency variation.

In one embodiment, the method of the third aspect further comprises making available a current QoS report.

In one embodiment, the method of the third aspect further comprises providing connectivity to any mobile robot which performs a navigation task. This is to say, network resources are allocated on the basis of whether the mobile robot performs a navigation task but may be independent on, say, location, robot type and other factors. In variations to this embodiments, the method further comprises providing connectivity to any mobile robot which performs a workpiece manipulation task, any mobile robot which performs a full-body motion task, and/or any mobile robot which performs a task with increased urgency.

The effects and advantages of the methods of the second and third aspects generally resemble those of the first aspect. Further, the methods of the second and third aspects can be implemented with an equivalent degree of technical variation as the first and second aspects, as will be described below.

The present disclosure further relates to a computer program containing instructions for causing a computer, or the control network in particular, to carry out the above methods. The computer program may be stored or distributed on a data carrier. As used herein, a "data carrier" may be a transitory data carrier, such as modulated electromagnetic or optical waves, or a non-transitory data carrier. Non-transitory data carriers include volatile and non-volatile memories, such as permanent and non-permanent storage media of magnetic, optical or solid-state type. Still within the scope of "data carrier", such memories may be fixedly mounted or portable.

As used in the present disclosure and notably the claims, the term "mobile robots" refers to self-propelled robots with a full-body motion capability, including automated guided vehicles (AGVs), autonomous mobile robots (AMRs) and mobile manipulators. Conceptually, mobile manipulators are mobile robots with one or more robot arms.

Generally, all terms used in the claims are to be interpreted according to their ordinary meaning in the technical field, unless explicitly defined otherwise herein. All references to "a/an/the element, apparatus, component, means, step, etc." are to be interpreted openly as referring to at least one instance of the element, apparatus, component, means, step, etc., unless explicitly stated otherwise. The steps of any method disclosed herein do not have to be performed in the exact order disclosed, unless explicitly stated.

### BRIEF DESCRIPTION OF THE DRAWINGS

Aspects and embodiments are now described, by way of example, with reference to the accompanying drawings, on which:
figure 1 shows a control network including an FMS and an NMS for supporting a fleet of mobile robots;
figure 2 shows a control network with two independent access networks which are used to provide predefined groups of the mobile robots with wireless connectivity in the facility; and
figure 3 is a sequence diagram showing information exchanged among the FMS, the NMS, the access networks and the mobile robots during operation.

### DETAILED DESCRIPTION

The aspects of the present disclosure will now be described more fully hereinafter with reference to the accompanying drawings, on which certain embodiments of the invention are shown. These aspects may, however, be embodied in many different forms and should not be construed as limiting; rather, these embodiments are provided by way of example so that this disclosure will be thorough and complete, and to fully convey the scope of all aspects of the invention to those skilled in the art. Like numbers refer to like elements throughout the description.

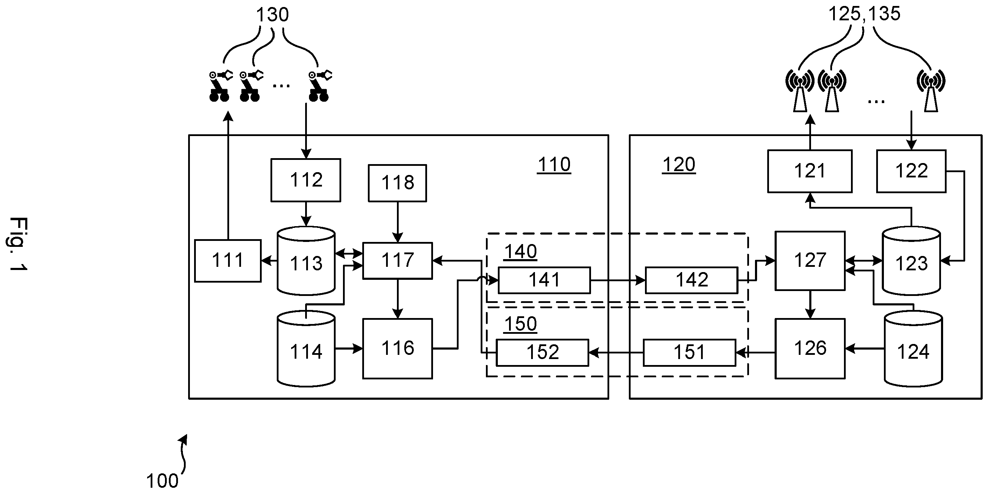

Figure 1 is a block diagram of a control network 100 for supporting a plurality of mobile robots (MRs) 130 which operate in a facility. The facility may be a building, factory, plant, warehouse, (partially outdoor) industrial environment, mine or the like. In some embodiments, the public road network is not a "facility" in this sense. The control network 100 comprises a fleet management system (FMS) 110 and a network management system (NMS) 120. It is recalled that the mobile robots 130 include self-propelled robots with a full-body motion capability, including automated guided vehicles (AGVs), autonomous mobile robots (AMRs) and mobile manipulators (conceptually, they are mobile robots with one or more robot arms). The mobile robots 130 may in particular be configured as industrial robots or other utility robots, such as healthcare robots. They may be movable two-dimensionally on a surface or three-dimensionally in air or a liquid.

A basic responsibility of the NMS 120 is to configure a plurality of access networks 125 and perform resource allocation therein. The NMS 120 may have the exclusive authority to configure the access networks 125 at runtime. Each of the access networks 125 comprises wireless access points (WAPs) installed in the facility to provide the mobile robots 130 with wireless connectivity. The connectivity may be provided over air interfaces that each extends from one of the WAPs to a wireless field device (WFD) 135 in a mobile robot 130. A WFD 135 can constitute a (mobile) station of Wi-Fi^{™} (IEEE 802.11 series), a field device of WIA-FA, or a user equipment (UE) adapted for a cellular network, e.g., a 5G network such as a 3GPP NG-RAN. Correspondingly, a WAP can be the access point of Wi-Fi^{™}, the access device of WIA-FA, or a base station (NB, eNB, gNB) of the cellular network. The MRs 130 may connect to different WAPs as they move between different areas of the facility, which may be facilitated by per se known handoff techniques. Additionally, the access networks 125 may be used to communicate instructions from the FMS 110 to the mobile robot 130, including planned motion paths, robot tasks (utility tasks) and robot motion references. Example robot tasks are navigation, workpiece manipulation and full-body motion. Multiple robot tasks may be communicated as a robot mission *M*, in the form of an ordered set of robot tasks *Tⱼ* which are disjoint or (partially) overlapping in time: *M =* (*T*₁, *T*₂, *..., T_{J}*).

An example internal structure of the NMS 120 is shown in figure 1. The structure - like that of the FMS 110 to be described below - is to be understood as a functional one. More precisely, it may correspond to an arrangement of physical components or an arrangement of portions of executing software code. The connectors in figure 1 represent typical flows of information occurring when the NMS 120 operates according to the present disclosure. The layout of these flows does not preclude that information may travel along other paths in the internal structure, as is the case, e.g., when multiple components are connected to a common network with a star or mesh topology.

In the NMS 120, a network monitor 122 collects status information from the WAPs in the access networks 125 in the facility and from WFDs 135 in the MRs 130, and stores it in a network database 123. In many cases, even if the WAPs and WFDs 135 are deployed and owned by the same entity as the MRs 130 and facility, the FMS 110 does not have direct access to the low-level status information, which is the preferred basis for predicting network QoS. It is particularly common in newer wireless technologies to restrict access to such low-level status information, including 5G, WIA-FA and Wi-Fi 6.

In the NMS 120, furthermore, a network configurator 121 configures the WAPs and WFDs 135 according to a resource allocation plan. The network configurator 121 may access the resource allocation plan in the network database 123.

A network resource allocator 127 in the NMS 120 generates the resource allocation plan on the basis of the collected status information relating to the wireless network, which it retrieves from the network database 123. The resource allocation plan may be generated, further, in view of maps of the facility which are supplied by a map database 124. The resource allocation plan may be generated, furthermore, in view of a predictive network resource request received from the FMS 110, as described in more detail below. The network resource allocator 127 stores the generated resource allocation plan in the network database 123.

In the NMS 120, there is further provided a network QoS forecaster 126. The QoS forecaster 126 is configured to predict the achievable network QoS based on the resource allocation plan and optionally based on map information relating to the facility.

Turning to the FMS 110, this system of the control network 100 is responsible for path planning and path execution with regard to the MRs 130. The FMS 110 may have task planning and task execution as a further responsibility, wherein utility tasks (production, processing, material handling, transport etc.) are assigned to one or more of the mobile robots 130. Such tasks may be elements of a higher-level task or a project which the FMS 110 is to carry out. The path planning may support the assigned tasks or may be non-productive, e.g., related to maintenance or parking of the MRs 130. The path execution may include providing movement commands (motion references) to the mobile robots 130 wirelessly over the access networks 125. The FMS 110 may have the exclusive authority to perform path planning and path execution during runtime. The FMS 110 or some section thereof may execute Robot Operating System 1 or 2 (ROS1, ROS2).

Within the FMS 110, there is provided a fleet monitor 112, which collects status information from the MRs 130 and stores it in a fleet database 113.

A task planner 118 generates the tasks to be performed by the MRs 130 according to the higher-level inputs, e.g., a production plan from a manufacturing execution system (not shown).

A path planner 117 generates the paths for the MRs 130 and stores them in the fleet database 113. The path planner 117 may be configured to generate the paths according to the collected status information of the MRs 130, which it may retrieve from the fleet database 113, and according to tasks assigned to the MRs 130 by the task planner 118. The path planning may further be based on maps of the facility, which are available from a map database 114. Alternatively or additionally, the path planning may further be based on an achievable (forecasted) QoS of the wireless network indicated by the QoS forecaster 126 in the NMS 120.

In the FMS 110, furthermore, a path executor 111 controls the MRs 130 so as to implement the paths from the fleet database 113 that were generated by the path planner 117 (see above), also taking into account the status of the MRs 130 from the fleet database 113.

There is also provided a network demand forecaster 116, which is operable to predict a quantity, type and/or location of the required network resources. The network demand forecaster 116 may base this prediction on the MR paths determined by the path planner 117 and maps of the facility, the latter being available from the map database 114.

The FMS 110 may be described, in relation to at least one of the mobile robots 130, as an edge computing resource. This is to say, processing circuitry in the FMS 110 is located, with respect to the topology of an access network 125, such that the mobile robot 130 is expected to enjoy a reasonable QoS in normal conditions, e.g., the connection between the mobile robot 130 and the FMS 110 normally fulfils a minimum throughput, a maximum allowed latency, or similar requirements. The fulfilment of such QoS requirements in normal conditions can be achieved by placing the FMS 110 suitably in relation to the mobile robot 130 and/or configuring that access network's 125 parameters related to routing, scheduling, resource allocation and traffic prioritization.

The communication between the FMS 110 and the NMS 120 can be in the form of conventional unicast, multicast or broadcast messages. Alternatively, as illustrated in figure 1, the communication may be supported by a publication-subscription (or PubSub) service 140, 150. The publication-subscription service 140, 150 is configured to facilitate the sharing of an assigned connectivity priority, a predictive network resource request and its reply, a QoS request and/or a QoS report between the FMS 110 and the NMS 120.

The publication-subscription service 140, 150 is characterized by an asynchronous message exchange, in the sense that the receiving side may receive the message at a time independent of, and possibly much after, the time when the sending side posts the message. The publication-subscription service 140, 150 may furthermore be characterized by a greater degree of decoupling of the sending and receiving sides than in communication according to conventional unicast or broadcast transmission, which is initiated by the sending side, and in message polling at the instance of the receiving side. Indeed, the sending side (or publisher) may post messages to a storage that belongs neither to itself nor the receiving side (or subscriber) but is provided by an intermediary (e.g., middleware, which receives and sends unicast or multicast messages). Implementations of the present invention may be compliant with the Data Distribution Service (DDS) standard or the Open Platform Communications Unified Architecture (OPC UA) PubSub protocol, or alternatively be compliant with specifications for the Network Exposure Function (NEF) Northbound Interface of 3GPP 5G/NR if a cellular connectivity framework is applied. Alternatively or additionally, some implementations of the present invention may be compliant with Service Enabler Architecture Layer (SEAL) under 3GPP Release 16 and higher, and notably the device-centric capabilities related to management of network resources, location information etc. therein.

As described in the applicant's above-referenced disclosure WO2022214193, the publication-subscription service 140, 150 may be structured into a network demand topic 140 and a network QoS topic 150. In a specific implementation, the FMS 110 instantiates a publisher 141 in the network demand topic 140 and a subscriber 152 in the network QoS topic 150. Similarly, the NMS 120 instantiates a publisher 151 in the network QoS topic 150 and a subscriber 142 in the network demand topic 140. With this setup, the path planner 117 in the FMS 110 can access information relating to the achievable QoS through the subscribed network QoS topic 150, and more precisely via the subscriber 152. The network demand forecaster 116 predicts required network resources and publishes corresponding information so that it becomes available to the NMS 120 through the network demand topic 140. Further, the network resource allocator 127 in the NMS 120 generates a resource allocation plan based on predictive resource requests from the FMS 110, which are received through the subscribed network demand topic 140. The network QoS forecaster 126 publishes its output, for use by the FMS 110, using the network QoS topic 150.

In the present disclosure, the inventors are proposing to use the types and capabilities of the mobile robots 130 (including mobile robot manipulators) as guidance in planning the operation of the overall wireless infrastructure for a factory floor, healthcare facility, or warehouse. For instance, a dedicated access network can be set up to only serve mobile robot manipulators, while another access network is used to provide connectivity for autonomous mobile robots (AMRs). This separation decreases the probability of such communication performance degradations that are due to an excessive number of wireless clients being served by the same access network. To keep overall infrastructure cost at a reasonable level, multiple such wireless networks can be established over the same equipment. In various embodiments, different service sets associated to specific radio bands and channels can be defined in WLAN/Wi-Fi access points, while different logical/virtual networks or network slices can be set up in cellular-based systems (e.g., 4G/LTE or 5G/NR).

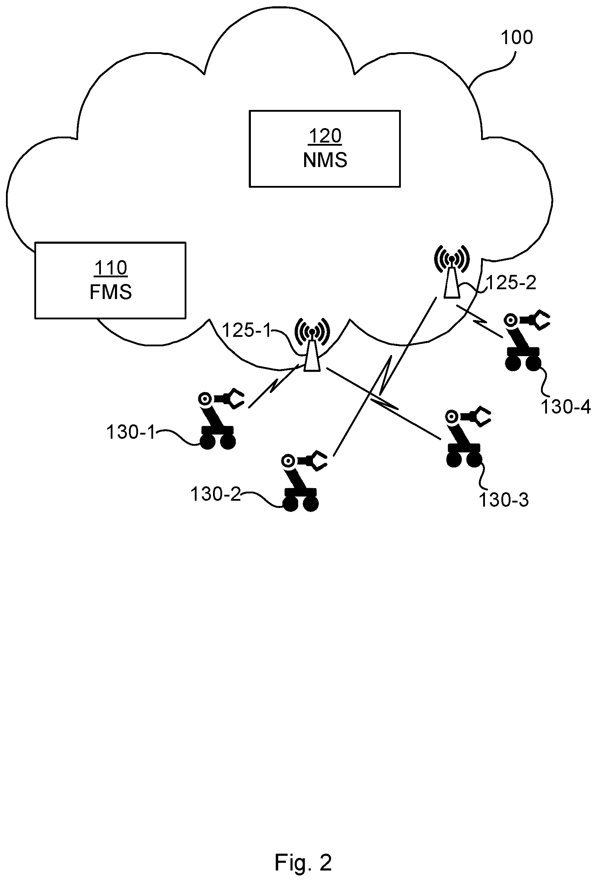

Figure 2 shows a control network 100 with two independent access networks 125-1, 125-2 which are used to provide different groups of the mobile robots 130 with wireless connectivity in the facility. It is seen that two mobile robots 130-1, 130-3 are served by a first access network 125-1, and two other mobile robots 130-2, 130-4 by a second access network 125-2. Figure 2 illustrates that the allocation of an access network 125 to a mobile robot 130 is not necessarily based on proximity (e.g., a rule that the access network 125 that has a WAP with the least signal attenuation shall be chosen) although, in some embodiments, the association may be subject to a requirement that the signal power must exceed a lower threshold. The allocation is controlled by the NMS 120, which instructs the network nodes of the respective access networks 125-1, 125-2 accordingly. The instructions can be provided on the basis of contextual information, such as the types and capabilities of the mobile robots 130 and/or the classes and urgency levels of the robot tasks assigned to the mobile robots 130 and/or planned robot trajectories.

More precisely, the class and urgency of the robot tasks and planned robot trajectories can be used to differentiate traffic treatment among the wireless clients in an access network. In fact, not all mobile robots 130 require communication with the same quality of service (QoS), notably with respect to latency and bandwidth, nor do they require the same QoS in all phases of the operation. As an example, a mobile robot 130 may at different times be performing navigation tasks, manipulation tasks, and full-body motion tasks, or combinations of these. Navigation tasks usually require lower network bandwidth and can tolerate higher latency with respect to manipulation and full-body motion tasks. The QoS requirement may be related to (proportional to) the frequency at which the motion references are sent to the mobile robot 130. Therefore, the required communication QoS can be adjusted for each mobile robot in view of an assigned robot task that it is performing and the priority of the robot task. Such factors (contextual information) can be exploited when reserving network bandwidth and specifying traffic treatment rules.

On a high level, the following approach can be followed:
- Before the FMS 110 assigns a robot task to a mobile robot 130, it generates a QoS request and shares this with the NMS 120. Based on the type and capabilities of the mobile robot 130 and/or the class and urgency of the robot task, the FMS 110 determines a required priority of treatment from the wireless network and estimated bandwidth etc. for the QoS request.
- Next, the FMS 110 inquires with the NMS 120 about the current operating conditions in the relevant access network(s) 125 and whether the QoS request can be fulfilled or not.
   If it turns out that the access network conditions do not support a nominal execution of the robot task, the FMS 110 may choose to postpone the assignment of the robot task until the access network has recovered or is less congested.
   Otherwise, the FMS 110 calculates a path (or trajectory) for the mobile robot 130. The NMS 120 reserves nominal bandwidth in all access points of the access networks 125 to be visited along the calculated path, and it configures their traffic treatment parameters.
- After this stage, the FMS 110 begins streaming in real time the required commands to the mobile robot 130. Doing so, the FMS 110 may further be receiving a flow of sensor data from the mobile robot 130, whereby obstacles in the mobile robot's path or other unforeseen events can be dealt with.

As a practical illustration, traffic for a mobile robot during navigation task in non-cluttered environments can be assigned lower priority without detriment, thereby allowing other mobile robots to benefit from higher communication QoS during phases in which wireless communication performance has higher requirements. A robot task that typically requires significant communication bandwidth is full-body motion with visual servoing. In specific embodiments, WLAN/Wi-Fi access points parameters can be set that allow traffic flows to be classified and to apply a specific traffic treatment for each wireless client (hence, each mobile robot 130). Traffic flows can be classified based on source and destination IP addresses, Transmission Control Protocol (TCP) or User Datagram Protocol (UDP) transport protocol ports in use, differentiated services code point (DSCP) values in data packets, etc. The related traffic-flow definitions can then be assigned different QoS levels.

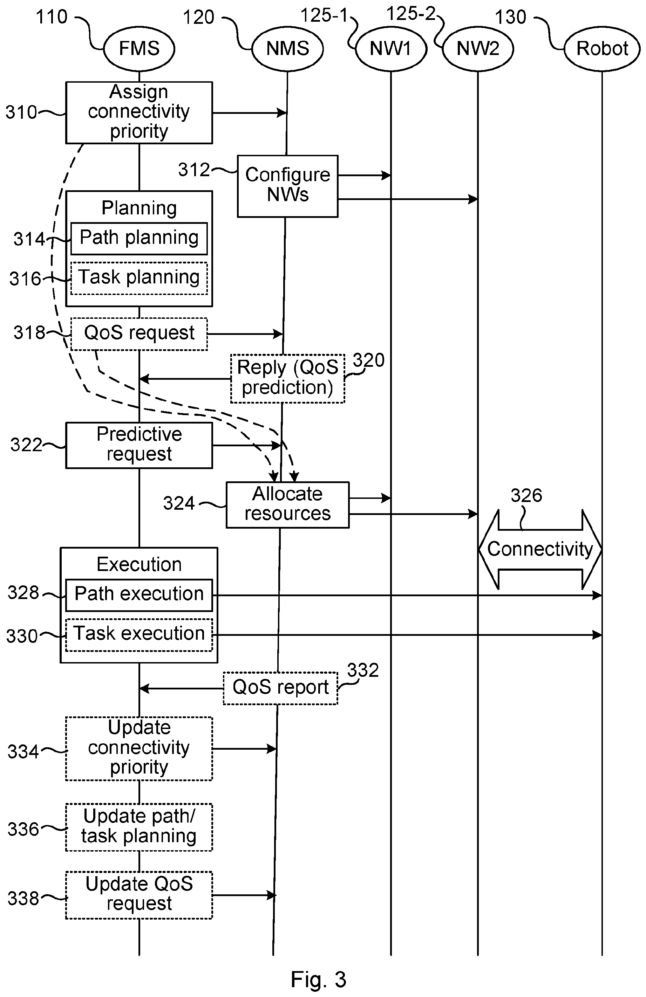

With reference now to the sequence diagram in figure 3, a method of operating the control network 100 will be described. Each step of the method will be executed in the FMS 110, in the NMS 120, the access networks 125-1, 125-2 (NW1, NW₂) or a combination of these network nodes. Of course, the execution of the method may as well influence the mobile robots 130, e.g., with respect to control data to be executed by actuators in a mobile robot 130, sensor data to be read from sensors in the mobile robot 130 and/or configuration data to be loaded into a memory or processor of the mobile robot 130. It is emphasized that the exact sequence of the steps may differ from the example depicted in figure 3, and one or more steps may overlap in time.

As explained above, the main responsibilities of the FMS 110 may include:
- keeping track of the mobile robots 130, their capabilities, robot tasks to be assigned, and connectivity priorities;
- managing and adjusting relative connectivity priorities of the mobile robots 130 and robot tasks that can be assigned to them;
- planning robot paths (or trajectories) and sending robot motion references to execute said paths;
- calculating QoS requests relating to robot tasks, optionally based on status reports about the access networks 125 that the FMS 110 receives from the NMS 120; and sharing QoS requests with the NMS 120.

The main responsibilities of the NMS 120 may include:
- receiving QoS requests from the FMS 110 and acting accordingly by - as far as possible -configuring needed QoS levels and traffic treatment rules in the infrastructure (including attachment points) of the access networks 125; and
- reporting a current state of the access networks 125 to the FMS 110.

Within the method, as shown in figure 3, the FMS 110 may assign at least one connectivity priority 310 to a mobile robot 130 or robot task. The connectivity priority 310 may be assigned collectively, e.g., with reference to a type or other common identifier of a group of robots. Similarly, the connectivity priority 310 may be assigned to a group of robot tasks. Further, the connectivity priority 310 may have multiple independent values for one mobile robot 130, namely, one value for each access network 125 to be used by the particular mobile robot 130. The assigned at least one connectivity priority 310, according to any of these options, is shared with the NMS 120.

The connectivity priority 310 refers to an order in which the different mobile robots or the different robot tasks are to be served (i.e., allocated the requested QoS). This order may be expressed as a list where natural numbers are assigned to the different mobile robots or to the different robot tasks, with the significance that a robot/task with a lower assigned number takes precedence over a robot/task with a higher assigned number as far as network resource allocation is concerned. This formalism may simplify a later conversion, if needed, to standardized network prioritization parameters such as DiffServ Code Point (DSCP), WLAN/Wi-Fi user preference, and 5G QoS identifier (QCI).

The NMS 120 is responsible for configuring each of the access networks 125. Such configuring 312 may relate to operational parameters (settings) defining the internal operation of the nodes of the access networks and/or its behavior vis-à-vis connecting wireless clients. Different configurations may be applied to different access networks 125. The network configuration 312 may include an association rule, e.g., what predetermined group of mobile robots 130 and/or what predefined class of robot tasks is to be served by what access network 125. The configuration of the access networks 125 may be dependent on the connectivity priorities 310 assigned by the FMS 110. The configuring 312 may be entrusted to a network configurator 121 within the NMS 120.

The FMS 110 further performs various types of planning. The planning may include path planning 314 but also, in some embodiments of the method, task planning 316. As described above, path planning 314 may include the use of navigation algorithms, such as visual SLAM (simultaneous localization and mapping), and its output may be a path or trajectory to be followed by at least one mobile robot 130. The path planning 314 may be a responsibility of the FMS's 110 path planner 117. The task planning 316 similarly relates to a robot task (e.g., workpiece manipulation, transport) to be carried out by a robot arm or robot manipulator carried by at least one mobile robot 130 or - in the case of a transport task - possibly by a full-body movement of the mobile robot 130. The task planning 316 may be a responsibility of the FMS's 110 task planner 118, or it may be assigned to another entity of the control network 100, or even to an external entity. The output of the planning may optionally be stored temporarily in the FMS 110 (e.g., in the fleet database 113), to allow it to be executed later.

Before executing a planned path or planned robot task, the FMS 110 may in some embodiments inquire with the NMS 120 whether the access networks 125 are likely able to provide connectivity with a sufficient QoS level during the execution. To do so, the FMS 110 may generate a QoS request 318 and share it with the NMS 120, which is expected to react by sharing a reply (or QoS prediction) 320 with the FMS 110. A network QoS forecaster 126 in the NMS 120 may be configured to generate said reply 320.

The QoS request 318 depends on, or is based on, the output of the planning stage 316, 318. Part of its content may be prepared by the network demand forecaster 116 described above. In particular, the QoS request 318 may relate to a robot task to be performed in a specified time interval by one or more mobile robots 130. Optionally, the QoS request 318 may further specify an approximate location, such as a section of a factory, where the robot task is going to be executed. It is appreciated that a QoS requirement or a priority level can be assigned on the basis of the previously assigned connectivity priority 310.

A still further option is for the QoS request 318 to specify a required priority of treatment of the mobile robot(s) 130 performing the robot task. The priority of treatment may be a relative priority, which expresses to what extent this mobile robot(s) 130 shall take precedence over other mobile robots 130 when the NMS 120 has to decide on competing requests for network resources from different mobile robots 130. The absolute QoS metric to which this priority of treatment will correspond during operation is usually dependent on the current operating conditions of the access networks 125. Despite this, the inventors have found that the assurance of a certain (high) priority of treatment provides reasonable certainty that a particular robot task can be executed successfully. This is true especially in a stably operated control network 100 with no large fluctuations from day to day. Further still, the QoS request 318 may optionally specify, instead of the (relative) priority of treatment, one or more absolute QoS metrics, such as an estimated bandwidth, data throughput, packet loss rate, packet loss burstiness, transmission reliability, latency, latency variation, maximum allowed latency with minimum required transmission reliability, and the like.

The FMS 110 may decide whether to execute the robot task or not depending on the content of the reply 320. If the reply 320 is positive (e.g., network resources for the requested QoS are indeed available), the FMS 110 will normally proceed to an execution stage, including path execution 328 and optionally task execution 330 as well. The path execution 328 may be carried out by, or with the assistance of, the path executor 111 in the FMS 110. If the reply 320 is not positive, the FMS 110 may in some embodiments decide to retry later with the same planned path or planned task. In other embodiments, the FMS 110 may be configured to re-plan the path and/or task so as to give it a more modest QoS requirement; the FMS 110 then re-submits the QoS request 318 to the NMS 120 and may expect that the likelihood of a positive reply 320 has increased. The re-planning option may incur a greater computational effort, which may however be considered justified for urgent tasks. In still further embodiments, the FMS 110 may adopt different behaviors in reaction to a not fully positive QoS reply 320 from the NMS 120, e.g., to wait and retry in the case of a relatively larger QoS insufficiency and to re-plan in the case of a relatively smaller QoS insufficiency. A threshold may be defined for this purpose. Similar reactions may be configured if the NMS 120 fails to send a reply 320 within a predefined time.

Further, the content of the reply 320 - and particularly a negative or partially negative content - may in some embodiments cause the FMS 110 to update 334 the assigned at least one connectivity priority. This is especially relevant if a QoS insufficiency is found to persist over time, e.g. after several retries by the FMS 110, which suggests that one of the access networks 125 has insufficient resources, and these need to be distributed in a different manner across the mobile robots 130. In particular, more urgent or more important tasks may be granted precedence over routine tasks.

When the FMS 110 is going to execute a planned path or planned robot task, after the optional QoS inquiry with the NMS 120 (messages 318, 320), the FMS 110 submits a predictive network resource request 322 to the NMS 120. The predictive network resource request 322 is based on an output of the planning stage, such as information derived from a planned path or planned task. The predictive network resource request 322 may include a validity time interval or an expiry time, so that the NMS 120 may liberate the claimed network resources and re-allocate them to other mobile robots 130 or other robot tasks. Generally speaking, the predictive network resource request 322 may be similarly structured as the QoS request 318, in terms of the scope of applicability (robot task, time interval, location) and the substantive QoS requirements. The predictive network resource request 322 may optionally make reference to the information in an earlier QoS request 318, to avoid duplication of information.

In reaction to a predictive network resource request 322, the NMS 120 is expected to perform a network resource allocation 324 relating to one or multiple access networks 125. The resource allocation 324 may be carried out by configuring operational parameters of the access networks 125. Within the NMS 120, a network resource allocator 127 may be responsible for performing the resource allocation 324. The resource allocation 324 may be dependent, in addition to the predictive network resource request 322 itself and possible further factors, on the assigned at least one connectivity priority 310 and/or a content of an earlier QoS request 318. This dependence is suggested by the curved dashed arrows in figure 3. In this sense, the FMS 110 causes the NMS 120 to allocate network resources in the access networks 125 to the one or more mobile robots 130 in accordance with the at least one connectivity priority 310.

The access network(s) 125 will, in turn, provide connectivity 326 to the mobile robots 130. Said mobile robots 130 to which connectivity is provided may be performing a navigation task, a workpiece manipulation task and/or a full-body motion task. The NMS 120 may further be configured to provide, via the access networks 125, dedicated connectivity to such mobile robots 130 that perform urgent tasks (i.e., tasks with increased urgency relative to a normal degree of urgency). The providing of the connectivity 326 by the access networks 125 may continue until further notice, i.e., it may proceed in parallel with later exchanges of messages between the FMS 110, the NMS 120 and/or the mobile robots 130.

At this point, the FMS 110 may move on to an execution stage at which it executes the output of the planning, including path execution 328 and/or task execution 330. The execution stage may include feeding control data to a mobile robot 130 and receiving sensor data from the mobile robot 130. The control data may be determined by an open-loop approach (e.g., executing a script) or by a closed-loop approach in which the sensor data is input to a predefined control law that produces the control data, in a per se known manner. As mentioned above, the sensor data flow may occupy significant bandwidth, e.g., if a mobile robot 130 operates one or more cameras. The control data for its part may be expressed as robot motion references sent at a predefined frequency. For example, a motion reference frequency of 20 Hz may be sufficient for path execution, and 250 Hz may be suitable for the execution of an industrial assembly task.

It is understood that, in some embodiments, the network resource allocation 324 may be updated in the course of the execution stage, e.g., because a mobile robot 130 switches from a first task with a lower QoS requirement to a second task with a higher QoS requirement, or vice versa. Such task switching may be communicated between the FMS 110 and the NMS 120, it may be implicit from a pre-agreed time schedule of the planned path and/or planned task, or the NMS 120 may monitor the progress of the execution stage using sensors (network probes) or other indirect information.

The NMS 120 may provide the FMS 110 with feedback about the operational status of the access networks 125 during the execution stage. This allows the FMS 110 to interrupt or modify the path execution 328 or task execution 330 in the case of an unexpected deterioration of relevant conditions prevailing in the access networks 125. Otherwise, the feedback confirms to the FMS 110 that the QoS is as forecasted, so that the FMS 110 has certainty that the execution stage can continue as planned. In detail, the NMS 120 may provide the feedback by making a QoS report 332 available to the FMS 110. The QoS report 332 may indicate a current value of one or more QoS metrics, such as a bandwidth, data throughput, packet loss rate, packet loss burstiness, transmission reliability, latency and a latency variation. The values may be measurements, including radio measurements or network pings, or indirect estimates of the QoS metrics. In particular, a network monitor 122 in the NMS 120 may provide the feedback contained in the QoS report 332. The QoS report 332 may be restricted to a specified area of the facility and/or have a specified validity time from the present time.

The FMS 110 may be configured to take no action when it receives a QoS report 332 with the expected content; this can be taken to mean that the path execution 328 and/or task execution 330 can continue as planned. If, however, the QoS reports 332 indicates that the QoS has dropped considerably compared to the expected level (e.g., as indicated in a reply 320 to an earlier QoS request 318 by the FMS 110), then the FMS 110 may for example react by updating 334 at least one previously assigned connectivity priority. Further, the FMS 110 may be configured to react by updating 336 the planning, including the path planning 314, wherein the outcome of the new planning will be executed for the remainder of the execution phase. Further still, the FMS 110 may react by sharing an updated QoS request 338 with the NMS 120; to the extent the network resource allocation 324 is being performed on the basis of a previous QoS request 318, the updated QoS request 338 will take its place, so that the network resource allocation 324 changes quantitatively or qualitatively.

After any of the mentioned types of updating 334, 336, 338, though this may not be explicit from figure 3, the execution phase may continue with the new settings. Further, a new cycle of path planning 314 and/or task planning 316 can be initiated after the updating 334, 336, 338, and the outputs of these may be executed similarly to the workflow described above. The FMS 110 is normally configured to continue the execution phase without interruption while it receives and analyzes the QoS report 332; this could help avoid costly downtime. If the QoS report 332 indicates a more serious ongoing QoS deficiency, the FMS 110 may temporarily suspend the execution phase.

The aspects of the present disclosure have mainly been described above with reference to a few embodiments. However, as is readily appreciated by a person skilled in the art, other embodiments than the ones disclosed above are equally possible within the scope of the invention, as defined by the appended patent claims.

## Claims

1. A control network (100) for supporting one or more mobile robots (130) operable in a facility, comprising:
a fleet management system, FMS (110), which is authorized to perform path planning and path execution for the one or more mobile robots, and to assign at least one connectivity priority to a particular robot or robot task, wherein connectivity priority refers to an order in which the different mobile robots or their tasks are to be served; and
a network management system, NMS (120), which is authorized to configure and perform network resource allocation in two or more access networks (125), each of which is operable to provide a predefined group of the one or more mobile robots with wireless connectivity in the facility and/or to provide a mobile robot with such connectivity while it executes a predefined class of robot tasks,
wherein the respective authorities of the FMS and the NMS are mutually exclusive,
wherein the FMS is configured to generate, on the basis of the path planning, a predictive network resource request (322) and share this with the NMS,
wherein the NMS is configured to perform network resource allocation (324) within each of the access networks in reaction to the predictive network resource request and in accordance with the at least one connectivity priority.

2. The control network (100) of claim 1, wherein:
the FMS (110) is configured to generate a quality-of-service, QoS, request (318) relating to a robot task and share the QoS request with the NMS (120);
the NMS is configured to predict (320) whether it is able to fulfil the QoS request and indicate this to the FMS; and
the FMS is further configured to decide to execute the robot task only upon receipt of a positive indication from the NMS.

3. The control network (100) of claim 2, wherein the QoS request (318) relates to a robot task to be performed in a specified time interval.

4. The control network (100) of claim 2 or 3, wherein the QoS request (318) includes a required priority of treatment of a robot (130) performing the robot task.

5. The control network (100) of any of claims 2 to 4, wherein the QoS request (318) includes one or more of: an estimated bandwidth, data throughput, packet loss rate, packet loss burstiness, transmission reliability, latency, latency variation, maximum allowed latency with minimum required transmission reliability.

6. The control network (100) of any of claims 2 to 5, wherein the NMS (120) is further configured to allocate network resources in accordance with the QoS request (318) if the FMS decides to execute the robot task.

7. The control network (100) of any of the preceding claims, wherein:
the NMS (120) is configured to generate a current QoS report (332) and share this with the FMS (110); and
the FMS (110) is configured to update at least one previously assigned connectivity priority (334) on the basis of the current QoS report (332).

8. The control network (100) of claim 7, wherein the FMS (110) is further configured to update the path planning (336) on the basis of the current QoS report (332).

9. The control network (100) of claim 7 or 8, wherein the FMS (110) is further configured to update a previously generated QoS request (338) on the basis of the current QoS report (332).

10. The control network (100) of any of the preceding claims, wherein the FMS (110) is configured for path execution (328) including feeding control data to a mobile robot and receiving sensor data from the mobile robot (130).

11. The control network (100) of any of the preceding claims, wherein the NMS (120) is configured to provide connectivity to one from the group comprising: any mobile robot (130) which performs a navigation task; any mobile robot (130) which performs a workpiece manipulation task; any mobile robot (130) which performs a full-body motion task; any mobile robot (130) which performs a task with an increased urgency.

12. The control network (100) of any of the preceding claims, wherein the NMS (120) is configured to dedicate the use of at least one of the access networks (125) to a predefined group of the one or more mobile robots (130), and/or to dedicate the use of at least one of the access networks to mobile robots which execute a predefined class of robot tasks.

13. A method for supporting one or more mobile robots (130) operable in a facility equipped with two or more access networks (125), wherein the method is implemented in a fleet management system, FMS (110) in a control network (100) and comprises:
assigning at least one connectivity priority (310) to a particular robot or robot task, wherein connectivity priority refers to an order in which the different mobile robots or their tasks are to be served;
performing planning, including path planning (314), for the one or more mobile robots;
generating a predictive network resource request (322) on the basis of an output of the planning, and sharing this with a network management system, NMS (120);
causing the NMS to allocate (324) network resources in the access networks to the one or more mobile robots in reaction to the predictive network resource request and in accordance with the at least one connectivity priority; and
executing (328) the output of the planning, including the path planning.

14. A method for supporting one or more mobile robots (130) operable in a facility equipped with two or more access networks (125), wherein the method is implemented in a network management system, NMS (120) in a control network (100) and comprises:
receiving at least one connectivity priority (310) assigned to a particular robot or robot task, wherein connectivity priority refers to an order in which the different mobile robots or their tasks are to be served;
receiving a predictive network resource request (322); and
allocating (324) network resources in the access networks to the one or more mobile robots in reaction to the predictive network resource request and in accordance with the received at least one connectivity priority.

15. A computer program comprising instructions to cause the control network (100) of claim 1 to execute the method of claim 13 or 14.

## Patentansprüche

1. Steuernetzwerk (100) zum Unterstützen eines oder mehrerer mobiler Roboter (130), die in einer Anlage betreibbar sind, umfassend:
ein Flottenverwaltungssystem, FMS, (110), das autorisiert ist, Pfadplanung und Pfadausführung für den einen oder die mehreren mobilen Roboter durchzuführen und einem bestimmten Roboter oder einer bestimmten Roboteraufgabe mindestens eine Konnektivitätspriorität zuzuweisen, wobei sich die Konnektivitätspriorität auf eine Reihenfolge bezieht, in der die verschiedenen mobilen Roboter oder ihre Aufgaben bedient werden sollen; und
ein Netzwerkverwaltungssystem, NMS, (120), das autorisiert ist, Netzwerkressourcenzuteilung in zwei oder mehr Zugangsnetzwerken (125) auszulegen und durchzuführen, die jeweils betreibbar sind, um einer vordefinierten Gruppe des einen oder der mehreren mobilen Robotern drahtlose Konnektivität in der Anlage bereitzustellen und/oder einem mobilen Roboter eine solche Konnektivität bereitzustellen, während er eine vordefinierte Klasse von Roboteraufgaben ausführt;
wobei die jeweiligen Autorisierungen des FMS und des NMS wechselseitig exklusiv sind,
wobei das FMS dazu ausgelegt ist, auf Basis der Pfadplanung eine vorhersagende Netzwerkressourcenanforderung (322) zu erzeugen und diese gemeinsam mit dem NMS zu verwenden,
wobei das NMS dazu ausgelegt ist, Netzwerkressourcenzuteilung (324) innerhalb eines jeden der Zugangsnetzwerke in Reaktion auf die vorhersagende Netzwerkressourcenanforderung und gemäß der mindestens einen Konnektivitätspriorität durchzuführen.

2. Steuernetzwerk (100) nach Anspruch 1, wobei:
das FMS (110) dazu ausgelegt ist, eine Dienstqualitätsanforderung, QoS-Anforderung, (318) in Bezug auf eine Roboteraufgabe zu erzeugen und die QoS-Anforderung gemeinsam mit dem NMS (120) zu verwenden;
das NMS dazu ausgelegt ist, vorherzusagen (320), ob es in der Lage ist, die QoS-Anforderung zu erfüllen, und dies dem FMS anzuzeigen; und
das FMS ferner dazu ausgelegt ist, erst nach Empfang einer positiven Anzeige vom NMS zu entscheiden, die Roboteraufgabe auszuführen.

3. Steuernetzwerk (100) nach Anspruch 2, wobei sich die QoS-Anforderung (318) auf eine in einem spezifizierten Zeitintervall durchzuführende Roboteraufgabe bezieht.

4. Steuernetzwerk (100) nach Anspruch 2 oder 3, wobei die QoS-Anforderung (318) eine erforderliche Priorität für die Behandlung eines Roboters (130) umfasst, der die Roboteraufgabe durchführt.

5. Steuernetzwerk (100) nach einem der Ansprüche 2 bis 4, wobei die QoS-Anforderung (318) eines oder mehrere von geschätzter Bandbreite, Datendurchsatz, Paketverlustrate, Bursthaftigkeit von Paketverlusten, Übertragungszuverlässigkeit, Latenz, Latenzschwankung, maximal zulässiger Latenz bei minimal erforderlicher Übertragungszuverlässigkeit umfasst.

6. Steuernetzwerk (100) nach einem der Ansprüche 2 bis 5, wobei das NMS (120) ferner dazu ausgelegt ist, Netzwerkressourcen gemäß der QoS-Anforderung (318) zuzuteilen, falls das FMS entscheidet, die Roboteraufgabe auszuführen.

7. Steuernetzwerk (100) nach einem der vorhergehenden Ansprüche, wobei:
das NMS (120) dazu ausgelegt ist, einen aktuellen QoS-Bericht (332) zu erzeugen und diesen gemeinsam mit dem FMS (110) zu verwenden; und
das FMS (110) dazu ausgelegt ist, mindestens eine zuvor zugewiesene Konnektivitätspriorität (334) auf Basis des aktuellen QoS-Berichts (332) zu aktualisieren.

8. Steuernetzwerk (100) nach Anspruch 7, wobei das FMS (110) ferner dazu ausgelegt ist, die Pfadplanung (336) auf Basis des aktuellen QoS-Berichts (332) zu aktualisieren.

9. Steuernetzwerk (100) nach Anspruch 7 oder 8, wobei das FMS (110) ferner dazu ausgelegt ist, eine zuvor erzeugte QoS-Anforderung (338) auf Basis des aktuellen QoS-Berichts (332) zu aktualisieren.

10. Steuernetzwerk (100) nach einem der vorangehenden Ansprüche, wobei das FMS (110) zur Pfadausführung (328) ausgelegt ist, die Zuführen von Steuerdaten zu einem mobilen Roboter und Empfangen von Sensordaten vom mobilen Roboter (130) umfasst.

11. Steuernetzwerk (100) nach einem der vorhergehenden Ansprüche, wobei das NMS (120) dazu ausgelegt ist, Konnektivität einem aus der Gruppe bereitzustellen, die Folgendes umfasst: einen mobilen Roboter (130), der eine Navigationsaufgabe ausführt; einen mobilen Roboter (130), der eine Werkstückmanipulationsaufgabe ausführt; einen mobilen Roboter (130), der eine Ganzkörperbewegungsaufgabe ausführt; einen mobilen Roboter (130), der eine Aufgabe mit erhöhter Dringlichkeit ausführt.

12. Steuernetzwerk (100) nach einem der vorhergehenden Ansprüche, wobei das NMS (120) dazu ausgelegt ist, die Verwendung mindestens eines der Zugangsnetzwerke (125) für eine vordefinierte Gruppe des einen oder der mehreren mobilen Roboter (130) zu reservieren und/oder die Verwendung mindestens eines der Zugangsnetzwerke für mobile Roboter zu reservieren, die eine vordefinierte Klasse von Roboteraufgaben ausführen.

13. Verfahren zum Unterstützen eines oder mehrerer mobiler Roboter (130), die in einer Anlage betreibbar sind, die mit zwei oder mehr Zugangsnetzwerken (125) ausgerüstet ist, wobei das Verfahren in einem Flottenverwaltungssystem, FMS, (110) in einem Steuernetzwerk (100) implementiert wird und Folgendes umfasst:
Zuweisen mindestens einer Konnektivitätspriorität (310) zu einem bestimmten Roboter oder einer bestimmten Roboteraufgabe, wobei sich die Konnektivitätspriorität auf eine Reihenfolge bezieht, in der die verschiedenen mobilen Roboter oder ihre Aufgaben bedient werden sollen;
Durchführen von Planung, die Pfadplanung (314) umfasst, für den einen oder die mehreren mobilen Roboter;
Erzeugen einer vorhersagenden Netzwerkressourcenanforderung (322) auf Basis einer Ausgabe der Planung und gemeinsames Verwenden dieser mit einem Netzwerkverwaltungssystem, NMS, (120);
Veranlassen des NMS, dem einen oder den mehreren mobilen Robotern (324) Netzwerkressourcen in den Zugangsnetzwerken zuzuweisen, in Reaktion auf die vorhersagende Netzwerkressourcenanforderung und gemäß mindestens einer Konnektivitätspriorität; und
Ausführen (328) der Ausgabe der Planung, die die Pfadplanung umfasst.

14. Verfahren zum Unterstützen eines oder mehrerer mobiler Roboter (130), die in einer Anlage betreibbar sind, die mit zwei oder mehr Zugangsnetzwerken (125) ausgerüstet ist, wobei das Verfahren in einem Netzwerkverwaltungssystem, NMS, (120) in einem Steuernetzwerk (100) implementiert wird und Folgendes umfasst:
Empfangen mindestens einer Konnektivitätspriorität (310), die einem bestimmten Roboter oder einer bestimmten Roboteraufgabe zugewiesen ist, wobei sich die Konnektivitätspriorität auf eine Reihenfolge bezieht, in der die verschiedenen mobilen Roboter oder ihre Aufgaben bedient werden sollen;
Empfangen einer vorhersagenden Netzwerkressourcenanforderung (322); und
Zuweisen von (324) Netzwerkressourcen in den Zugangsnetzwerken zu dem einen oder den mehreren mobilen Robotern in Reaktion auf die vorhersagende Netzwerkressourcenanforderung und gemäß der empfangenen mindestens einen Konnektivitätspriorität.

15. Computerprogramm, umfassend Anweisungen, um das Steuernetzwerk (100) nach Anspruch 1 zu veranlassen, das Verfahren nach Anspruch 13 oder 14 auszuführen.

## Revendications

1. Réseau de commande (100) pour la prise en charge d'un ou de plusieurs robots mobiles (130) utilisables dans une installation, comprenant :
un système de gestion de flotte, FMS, (110), qui est autorisé à réaliser une planification de parcours et une exécution de parcours pour le ou les robots mobiles, et à attribuer au moins une priorité de connectivité à un robot particulier ou à une tâche de robot particulière,
la priorité de connectivité se rapportant à un ordre dans lequel les différents robots mobiles ou leurs tâches doivent être traités ; et
un système de gestion de réseau, NMS, (120), qui est autorisé à configurer et réaliser une allocation de ressources de réseau dans au moins deux réseaux d'accès (125), dont chacun est utilisable pour doter un groupe prédéfini du ou des robots mobiles d'une connectivité sans fil dans l'installation et/ou pour doter un robot mobile d'une telle connectivité pendant qu'il exécute une classe prédéfinie de tâches de robot,
les autorités respectives du FMS et du NMS étant mutuellement exclusives,
le FMS étant configuré pour générer, sur la base de la planification de parcours, une demande prédictive de ressources de réseau (322) et partager cette demande avec le NMS,
le NMS étant configuré pour réaliser une allocation de ressources de réseau (324) au sein de chacun des réseaux d'accès en réaction à la demande prédictive de ressources de réseau et conformément à l'au moins une priorité de connectivité.

2. Réseau de commande (100) selon la revendication 1,
le FMS (110) étant configuré pour générer une demande de qualité de service, QoS, (318) relative à une tâche de robot et partager la demande de QoS avec le NMS (120) ;
le NMS étant configuré pour prédire (320) s'il est capable de satisfaire la demande de QoS et indiquer ceci au FMS ; et
le FMS étant configuré en outre pour décider d'exécuter la tâche de robot uniquement à la réception d'une indication positive de la part du NMS.

3. Réseau de commande (100) selon la revendication 2, la demande de QoS (318) concernant une tâche de robot à réaliser dans un intervalle de temps spécifié.

4. Réseau de commande (100) selon la revendication 2 ou 3, la demande de QoS (318) comportant une priorité exigée de traitement d'un robot (130) réalisant la tâche de robot.

5. Réseau de commande (100) selon l'une quelconque des revendications 2 à 4, la demande de QoS (318) comportant un ou plusieurs éléments parmi : une bande passante estimée, un débit effectif de données, un taux de pertes de paquets, un comportement en rafales des pertes de paquets, une fiabilité de transmission, une latence, une variation de latence, une latence maximale autorisée avec une fiabilité de transmission minimale exigée.

6. Réseau de commande (100) selon l'une quelconque des revendications 2 à 5, le NMS (120) étant configuré en outre pour allouer des ressources de réseau conformément à la demande de QoS (318) si le FMS décide d'exécuter la tâche de robot.

7. Réseau de commande (100) selon l'une quelconque des revendications précédentes,
le NMS (120) étant configuré pour générer un rapport de QoS actuel (332) et le partager avec le FMS (110) ; et
le FMS (110) étant configuré pour mettre à jour au moins une priorité de connectivité précédemment attribuée (334) sur la base du rapport de QoS actuel (332).

8. Réseau de commande (100) selon la revendication 7, le FMS (110) étant configuré en outre pour mettre à jour la planification de parcours (336) sur la base du rapport de QoS actuel (332).

9. Réseau de commande (100) selon la revendication 7 ou 8, le FMS (110) étant configuré en outre pour mettre à jour une demande de QoS précédemment générée (338) sur la base du rapport de QoS actuel (332).

10. Réseau de commande (100) selon l'une quelconque des revendications précédentes, le FMS (110) étant configuré pour une exécution de parcours (328) comportant l'application de données de commande à un robot mobile et la réception de données de capteur en provenance du robot mobile (130).

11. Réseau de commande (100) selon l'une quelconque des revendications précédentes, le NMS (120) étant configuré pour doter d'une connectivité un élément dans le groupe comprenant : tout robot mobile (130) qui réalise une tâche de navigation ; tout robot mobile (130) qui réalise une tâche de manipulation de pièce ; tout robot mobile (130) qui réalise une tâche de mouvement du corps entier ; tout robot mobile (130) qui réalise une tâche avec une urgence accrue.

12. Réseau de commande (100) selon l'une quelconque des revendications précédentes, le NMS (120) étant configuré pour dédier l'utilisation d'au moins un des réseaux d'accès (125) à un groupe prédéfini du ou des robots mobiles (130), et/ou pour dédier l'utilisation d'au moins un des réseaux d'accès à des robots mobiles qui exécutent une classe prédéfinie de tâches de robot.

13. Procédé de prise en charge d'un ou de plusieurs robots mobiles (130) utilisables dans une installation équipée d'au moins deux réseaux d'accès (125), le procédé étant mis en œuvre dans un système de gestion de flotte, FMS, (110) dans un réseau de commande (100) et comprenant :
l'attribution d'au moins une priorité de connectivité (310) à un robot particulier ou à une tâche de robot particulière, la priorité de connectivité se rapportant à un ordre dans lequel les différents robots mobiles ou leurs tâches doivent être traités ;
la réalisation d'une planification, comportant une planification de parcours (314), pour le ou les robots mobiles ;
la génération d'une demande prédictive de ressources de réseau (322) sur la base d'une sortie de la planification, et le partage de cette demande avec un système de gestion de réseau, NMS, (120) ;
le déclenchement de l'allocation (324), par le NMS, de ressources de réseau dans les réseaux d'accès au ou aux robots mobiles en réaction à la demande prédictive de ressources de réseau et conformément à l'au moins une priorité de connectivité ; et
l'exécution (328) de la sortie de la planification, comportant la planification de parcours.

14. Procédé de prise en charge d'un ou de plusieurs robots mobiles (130) utilisables dans une installation équipée d'au moins deux réseaux d'accès (125), le procédé étant mis en œuvre dans un système de gestion de réseau, NMS, (120) dans un réseau de commande (100) et comprenant :
la réception d'au moins une priorité de connectivité (310) assignée à un robot particulier ou à une tâche de robot particulière, la priorité de connectivité se rapportant à un ordre dans lequel les différents robots mobiles ou leurs tâches doivent être traités ;
la réception d'une demande prédictive de ressources de réseau (322) ; et
l'allocation (324) de ressources de réseau dans les réseaux d'accès au ou aux robots mobiles en réaction à la demande prédictive de ressources de réseau et conformément à l'au moins une priorité de connectivité reçue.

15. Programme d'ordinateur comprenant des instructions pour amener le réseau de commande (100) selon la revendication 1 à exécuter le procédé selon la revendication 13 ou 14.
